# EUROPÄISCHE PATENTSCHRIFT

(11) **EP 2 084 507 B1**
(45) Veröffentlichungstag und Bekanntmachung des Hinweises auf die Patenterteilung: **04.04.2012**
(21) Anmeldenummer: 07818337.3
(22) Anmeldetag: 21.09.2007
(51) Int. Cl.: G01M 17/00

(54) **ROLLENPRÜFSTAND UND WALZE HIERFÜR**
ROLLER-TYPE TEST STAND AND ROLLER FOR IT
BANC D'ESSAI À ROULEAUX ET CYLINDRE POUR CE BANC D'ESSAI

(30) Priorität: 21.09.2006 RU 2006133812
(43) Veröffentlichungstag der Anmeldung: 05.08.2009
(73) Patentinhaber: Snap-on Equipment Srl a unico socio, 42015 Correggio (RE) (IT)
(72) Erfinder: ALEXEEV, Andrey, Petrovich, 173003 Veliky Novgorod (RU)
(74) Vertreter: Eisenführ, Speiser & Partner
(86) Internationale Anmeldenummer: PCT/EP2007/008248
(87) Internationale Veröffentlichungsnummer: WO 2008/034629

(56) Entgegenhaltungen:
- EP-A- 0 360 179
- WO-A-02/055979
- US-A- 3 982 428
- US-B1- 6 405 586

## Beschreibung

Die Erfindung betrifft einen Rollenprüfstand für Kraftfahrzeuge gemäß dem Oberbegriff des Anspruchs 1 sowie eine Walze entsprechend dem Oberbegriff des Anspruchs 17. Insbesondere betrifft die Erfindung einen Rollenprüfstand, der enthält eine Abrolleinrichtung zum Abrollen der Räder des Kraftfahrzeugs mit wenigstens einer drehbar gelagerten Walze, welche eine profilierte Oberfläche aufweist, eine Antriebs- und Bremseinheit zum Antreiben und Abbremsen der Abrolleinrichtung und eine Steuereinheit zum Steuern der Antriebseinheit. Darüber hinaus betrifft die Erfindung eine Walze für einen Rollenprüfstand, die eine profilierte Oberfläche aufweist.

In der Praxis werden Rollenprüfstände beispielsweise verwendet, um Brenisprüfungen an Fahrzeugen, wie beispielsweise Personen- und Lastkraftwagen sowie Motorräder vorzunehmen, die Spureinstellungen zu prüfen oder die Stoßdämpfer zu testen. In solchen Prüfständen werden die Räder der angetriebenen Achsen des zu prüfenden Fahrzeuges auf eine oder mehrere drehbar gelagerte Walzen platziert. Anschließend werden verschiedene Prüfzyklen durchlaufen, in denen das Antriebs- und/oder Bremsverhalten sowie der Zustand der Stoßdämpfer geprüft werden kann.

Ein Prüfstand der eingangsgenannten Art ist beispielsweise aus der DE-Patentschrift 196 35 194 bekannt. In dieser Fahrzeugprüfeinrichtung steht das zu prüfende Rad mit zwei angetriebenen Rollen in Kontakt. Diese beiden Rollen dienen der Prüfung der Bremsen. Zwischen diesen beiden Rollen ist parallel eine dritte Rolle axial verschiebbar angeordnet, mit der eine mögliche Spurabweichung festgestellt werden kann. Durch axiales Verschieben der beiden ersten Rollen ist es weiterhin möglich ein Lenkspiel festzustellen.

Solche Fahrzeugprüfungen werden normalerweise in einer Halle oder einer Werkstatt durchgeführt, daher verfügen bekannte Fahrzeugprüfeinrichtung wie beispielsweise die in der DE 196 35 194 beschriebene über glatte oder nur minimal profilierte Walzen, auf denen die zu prüfenden Räder platziert werden, um einen guten Kontakt zwischen dem Rad und der Walze zu herzustellen.

US 3 982 428 A offenbart einen Fahrzeugrollenprüfstand mit einer Abröffeinrichtung zum Abrollen der Räder des Kraftfahrzeugs mit wenigstens einer drehbar gelagerten Walze, welche eine profilierte Oberfläche aufweist, eine Antriebseinheit zum Antreiben der Abrolleinrichtung und eine Steuereinheit zum Steuern der Antriebseinheit, wobei die Profilierung auf der Oberfläche der mindestens einen Walze entlang wenigstens eines Schraubenlinienabschnitts angeordnet ist. Die Profilierung der Walze umfasst schraubenlinienförmig ausgebildete Nuten in der Walzenoberfläche.

Unter erschwerten Bedingungen, wie durch Schnee oder Schlamm stark verschmutzten Reifen oder bei extremer Nässe verringert sich bei glatten oder nur minimal profilierten Walzen die Haftung zwischen dem Reifen und der Walze und es entsteht Schlupf, der die Messergebnisse unzulässig verfälscht.

Ein weiteres Problem tritt auf, wenn Fahrzeuge getestet werden sollen auf denen Räder mit Spikes montiert sind. Solche Reifen haben auf glatten, zu gering oder auch ungeeignet profilierten Rollen eines Prüfstandes keine Haftung. Daher sind solche Prüfstände zur Prüfung dieser Fahrzeuge untauglich.

Aufgabe der vorliegenden Erfindung ist es daher, die vorgenannten Nachteile zu überwinden und einen Rollenprüfstand der eingangs genannte Art sowie eine Walze hierfür zur Verfügung zu stellen, der mit einfachen Mitteln eine effektive und sichere Prüfung an Kraftfahrzeugen ermöglicht.

Die vorstehende Aufgabe wird hinsichtlich des Rollenprüfstandes durch die Merkmale des Anspruchs 1 gelöst. Weitere vorteilhafte Ausgestaltungen des erfindungsgemäßen Rollenprüfstandes sind in den Ansprüchen 2 bis 16.

Insbesondere wird ein Rollenprüfstand für Kraftfahrzeuge zur Verfügung gestellt, der eine Abrolleinrichtung zum Abrollen der Räder des Kraftfahrzeugs mit wenigstens einer drehbar gelagerten Walze enthält, welche eine profilierte Oberfläche aufweist. Der Rollenprüfstand enthält weiterhin eine Antriebs- und Bremsein-heit zum Antreiben und Abbremsen der Abrolleinrichtung und eine Steuereinheit zum Steuern der Antriebseinheit.

Die Profilierung der wenigstens einen Walze ist durch Schweißpunkte gebildet, die auf der Oberfläche der mindestens einen Walze entlang wenigstens eines Schraubenlinienabschnitts angeordnet sind. Der Schraubenlinienabschnitt kann dabei sowohl linksläufig wie auch rechtsläufig sein.

Die Bildung der Profilierung durch Schweißpunkte lässt sich kostengünstig und mit geringem technischem Aufwand realisieren und kann ebenso leicht verändert werden, beispielsweise zur Anpassung an spezielle Einsatzbedingungen.

Der schraubenlinienförmige Verlauf der Schweißpunkte verhindert ebenfalls, dass sich ringförmig um die Walze umlaufende Bereiche ohne Profilierung bilden, auf denen dann vor allem Reifen mit Spikes keine Haftung hätten.

Das Profilierung kann natürlich auch jedes andere geeignete Muster aufweisen. Die Schweißpunkte können ebenfalls entlang zweier gegenläufiger Schraubenlinieabschnitte angeordnet sein. Es kann ebenso vorgesehen sein, dass mehrere Schraubenlinienabschnitte auf der Oberfläche der mindestens einen Walze vorgesehen sind, die gegenläufig sind und/oder unterschiedliche Steigungen aufweisen.

Zur Anpassung an spezielle Reifentypen kann in einer vorteilhaften Ausführung vorgesehen sein, dass die Abstände der Schweißpunkte gleichmäßig oder ungleichmäßig sind. Es kann aber auch eine Mischung aus gleichmäßig und ungleichmäßig verteilten Schweißpunkten vorgesehen sein.

In einer weiterhin vorteilhaften Ausführung beträgt die Steigung des wenigstens einen Schraubenlinienabschnitts 8 bis 20 mm, vorzugsweise 10 ± 1 mm und der Abstand zweier benachbarter Schweißpunkte auf dem Schraubenlinienabschnitt 8 bis 30 mm, vorzugsweise 23 ± 2 mm.

Durch diese Anordnung der Schweißpunkte wird eine optimale Haftung zwischen Reifen und Walze erreicht, da der Reifen zu jeder Zeit mit einer Mindestanzahl an Schweißpunkten in Eingriff steht.

Auch die Form der Schweißpunkte kann variieren. Sie können beispielsweise einen halbkreisförmigen Querschnitt oder einen kalottenförmigen Querschnitt haben, zur Optimierung der Haftung unter verschiedenen Einsatzbedingungen.

In einer weiterhin bevorzugten Ausführung ist vorgesehen, dass die Abrolleinrichtung zwei achsparallel zueinander angeordnete Walzen aufweist. Hierdurch wird ein sicherer Stand der Reifen auf dem Rollenprüfstand gewährleistet.

Ist die wenigstens eine Walze durch einen koaxial um eine Achse angeordneten Zylinder gebildet, der mittels kreisringförmiger Scheiben axial nicht verschiebbar und drehfest mit der Achse verbunden ist, kann eine besonders kostengünstige Herstellung dieser Walze erreicht werden.

Die Herstellungskosten lassen sich weiterhin dadurch senken, dass die drehfeste Verbindung zwischen dem Zylinder und der Achse durch eine Schweißverbindung realisiert ist.

In einer bevorzugten Ausführung sind in den Stirnseiten der wenigstens einen Walze Öffnungen vorgesehen sind. Diese Öffnungen gewährleisten, dass das Innere der Walze ausreichend belüftet ist und auftretende Nässe sich dort nicht aufstauen kann. Hierdurch wird Korrosion reduziert sowie die Lebensdauer und Betriebssicherheit der Walze erhöht. Die Öffnungen können außerdem als Inspektionsöffnungen zur Überprüfung des Walzeninneren genutzt werden.

Hinsichtlich der Walze wird die vorstehende Aufgabe durch die Merkmale des Anspruchs 17 gelöst. In den sich daran anschließenden Ansprüchen 18 bis 31 finden sich vorteilhafte Ausgestaltungen der Walze. Die erfindungsgemäße Walze verwirklicht die gleichen Vorteile, wie sie vorstehen im Zusammenhang mit dem erfindungsgemäßen Rollenprüfstand diskutiert worden sind.

Weitere vorteilhafte Ausgestaltungen sowie ein Ausführungsbeispiel des erfindungsgemäßen Rollenprüfstandes und der Walze werden nachstehend im Zusammenhang mit der Beschreibung einer Ausführungsform in Verbindung mit den beigefügten Zeichnungsfiguren näher erläutert. Die bei der Beschreibung des Ausführungsbeispiels verwendeten Begriffe "oben", "unten", "links" und "rechts" beziehen sich auf die Zeichnungsfiguren in einer Ausrichtung mit normal lesbaren Bezugszeichen und Figurenbezeichnungen.

Es zeigen:
- Fig. 1: eine Draufsicht auf einen erfindungsgemäßen Rollenprüfstand;
- Fig. 2: eine Schnittdarstellung einer erfindungsgemäßen Walze bei einem erfindungsgemäßen Rollenprüfstands entlang der Rotationsachse der Walze; und
- Fig. 3: eine Draufsicht auf die erfindungsgemäße Walze.

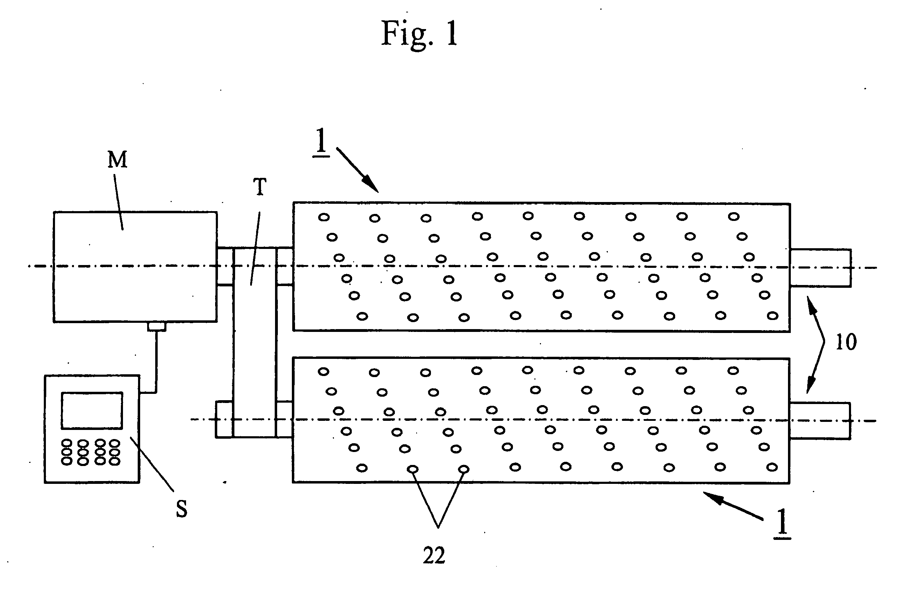

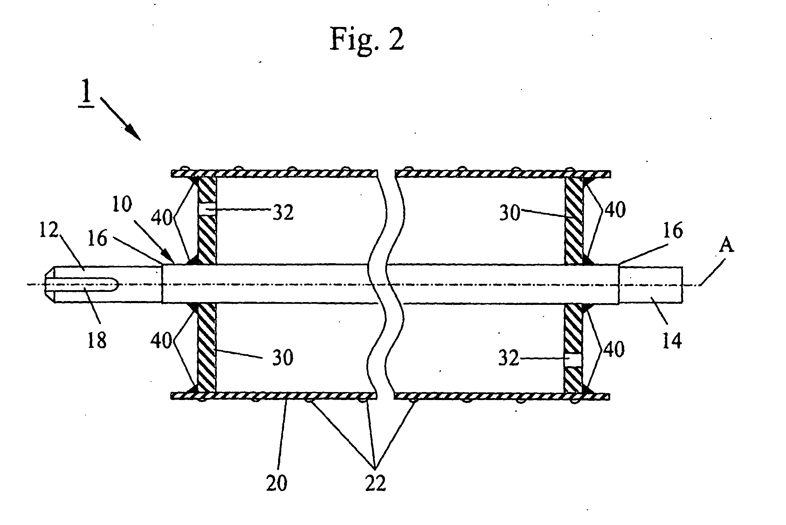

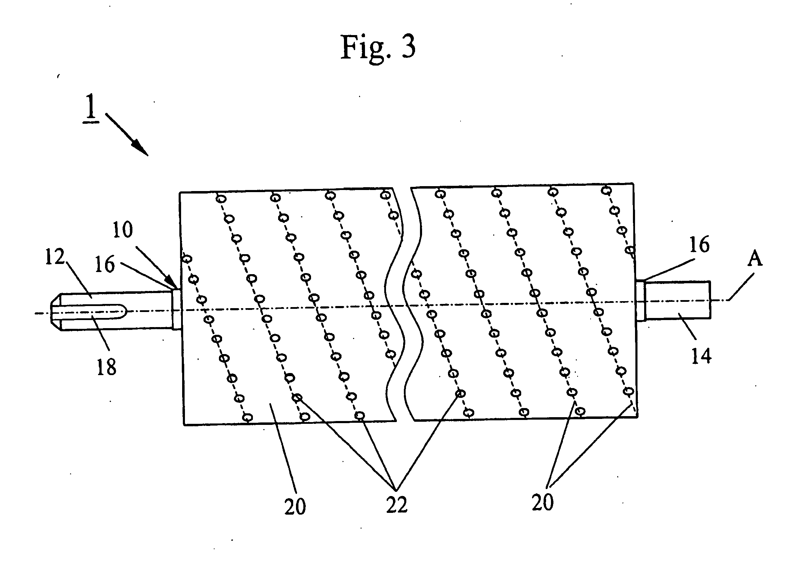

Fig. 1 zeigt eine Draufsicht auf eine Ausführung eines erfindungsgemäßen Rollenprüfstand. Der dargestellte Rollenprüfstand weist zwei ebenfalls erfindungsgemäße im Wesentlichen horizontal verlaufende Walzen 1 auf, die nachstehend im Zusammenhange mit den Fig. 2 und 3 näher beschrieben werden. Die Walzen 1 sind achsparallel so zueinander ausgerichtet, dass sich zwischen ihnen ein gleichmäßig breiter Spalt ausbildet. Die Enden der Wellen 10 sind in einer nicht dargestellten Rahmenkonstruktion gelagert, die auch die ebenfalls nicht dargestellten Lagereinheiten aufnimmt.

Ein Motor M, der beispielsweise ein Elektromotor sein kann, ist koaxial zu einer der Walzen 1 ausgerichtet und mit seiner Antriebswelle direkt mit der Welle 10 der Walze 1 verbunden. Über eine nicht näher spezifizierte Transmission T wird auch die zweite Walze 1 durch den Motor M angetrieben. Die Transmission T kann beispielsweise als Riementrieb ausgeführt sein. Es können aber auch Zahnräder auf den Wellen 10 vorgesehen sein, wobei der Antrieb der zweiten Walze dann durch eine Kette erfolgen würde.

Es kann auch vorgesehen sein, den Motor nicht direkt mit der Welle 10 der Walze 1 zu verbinden. In dem Fall kann die Koppelung des Motors M an die Welle 10 über eine weitere Transmission erfolgen.

Eine Steuerung S ist mit dem Motor M verbunden. In der Steuerung S können verschiedene Prüfprogramme gespeichert sein. Entsprechend dem zu prüfenden Fahrzeug und/oder der durchzuführenden Prüfung wird ein gewünschtes Programm aufgerufen, das dann den Motor M zum Antrieb oder zum Abbremsen der Walzen 10 steuert.

Wie aus Fig. 2 entnehmbar, besteht die erfindungsgemäße Walze 1 aus einer Welle 10 um die ein hohlzylindrischer bzw. rohrförmiger Walzenkörper 20 koaxial angeordnet ist. Die Welle 10 ragt mit ihrem linken Ende 12 aus zylindrischen Walzenkörper 20 heraus. Dieses Ende 12 hat einen geringeren Durchmesser ais der mittlere Teil der Welle 10. Hierdurch wird eine Schulter 16 gebildet, gegen die eine nicht dargestellte Lagereinheit zur Lagerung der Welle 10 abgestützt werden kann. Das linke Ende 12 der Welle 10 weist weiterhin eine Ausnehmung in Form einer axial verlaufenden Nut 18 auf, die zur Aufnahme einer Passfeder vorgesehen ist. Dadurch ist es möglich, beispielsweise ein Zahnrad oder eine Riemenscheibe zum Antrieb der Walze 1 auf der Welle 10 anzuordnen und drehfest mit ihr zu verbinden.

Auch das rechte Ende 14 der Welle 10 ragt über den zylindrischen Walzenkörper 20 hinaus, jedoch nicht so weit, wie das linke Ende 12. Der Durchmesser des rechten Endes 14 entspricht dem des linken Endes 12. Auch hier bildet der Übergang zwischen den Ende 14 und dem mittleren Teil der Welle 10 eine Schulter 16, zur Abstützung einer auf den rechten Ende 14 angeordneten, ebenfalls nicht dargestellten Lagereinheit. Die Welle 10 besteht vorzugsweise aus einem geeigneten gut schweißbaren Stahl.

Der zylindrische Walzenkörper 20 ist vorzugsweise ebenfalls aus einem gut schweißbaren Stahl hergestellt. Seine Wandstärke ist so gewählt, dass er sich unter der Belastung eines zu prüfenden Fahrzeuges nicht verformt. Auf der Oberfläche der zylindrischen Walzenkörpers 20 sind Schweißpunkte 22 angeordnet, die, wie aus Fig. 1 zu sehen, einen halbkreisförmigen Querschnitt haben.

Wie aus Fig. 3 zu entnehmen ist, sind die Schweißpunkte 22 auf der Oberfläche des Walzenkörpers 20 entlag eines mit einer Strichlinie dargestellten Schraubenlinienabschnitts 24 bzw. entlang einer Schraubenlinie 24 angeordnet. Als Material für die Schweißpunkte 22 ist ebenfalls Stahl, z.B. St 52 vorgesehen. Im dargestellten Ausführungsbeispiel ist die Schraubenlinie 24 rechtsläufig. Sie kann aber ebenfalls linksläufig sein oder abschnittsweise ihre Richtung ändern, wenn mehrere Schraubenlinienabschnitte 24 vorgesehen sind. Die Steigung der Schraubenlinie 24 kann je nach Einsatzbedingungen größer oder kleiner sein. Sie sollte, sich erfindungsgemäß aber in einem Bereich von 8 bis 30 mm, vorzugsweise 10 **±** 1 mm bewegen. Der Abstand zweier benachbarter Schweißpunkte 22 sollte 8 bis 30 mm, vorzugsweise 23 ± 2 mm betragen.

Dadurch befinden sich unter der Aufstandsfläche des zu prüfenden Rades immer eine bestimmte Mindestanzahl an Schweißpunkten. Durch den schraubenlinienförmigen Verlauf wird außerdem verhindert, dass sich bei viel Nässe ein um die Walze 1 umlaufender Streifen Wasser bildet, der "Aquaplaning" hervorrufen kann. Insgesamt wird durch die vorbeschriebenen Maßnahmen die Haftung zwischen dem Reifen und der Walze 1 auch bei schlechten Bedingungen wie Schnee oder Schlamm optimiert bzw. Schlupf minimiert.

Wie weiterhin aus Fig. 3 zu entnehmen ist, ist der um die Welle 10 angeordnete zylindrische Walzenkörper 20 geringfügig kürzer als der mittlere, durch die Schultern 16 begrenzte Teil der Welle 10. Der zylindrische Walzenkörper 20 ist weiterhin so auf der Welle 10 angeordnet, dass die Schultern 16 einen gleichen Abstand zu den Enden des Walzenkörpers 20 aufweisen. Hierdurch werden Kollisionen des Walzenkörpers mit dem Rahmen vermieden, der die Lagereinheiten trägt, bzw. dessen Konstruktion vereinfacht.

Die kreisringförmigen Scheiben 30 weisen eine zentrale Bohrung auf, deren Durchmesser etwa dem Außendurchmesser der Welle 10 entspricht, sodass diese spielfrei auf die Welle 10 aufgeschoben werden könnet. Die Rotationsachse A der Welle 10 steht dabei senkrecht auf der Haupterstreckungsebene der Scheiben 30. Der Außendurchmesser der kreisringförmigen Scheiben 30 entspricht dem Innendurchmesser des zylindrischen Walzenkörpers 20. Die Scheiben 30 sind im Bereich der Enden des Walzenkörpers 20 um eine bestimmte Länge in diesen hineingeschoben. Dadurch wird die koaxiale Lage des Walzenkörpers 20 zur Welle 10 sichergestellt. Schweißnähte 40 sichern die Scheiben 30 und den Walzenkörper 20 in axialer Richtung und stellen eine drehfeste Verbindung zwischen der Welle 10 und dem Walzenkörper 20 her. Die Scheiben 30 weisen weiterhin Öffnungen 32 auf. Diese gewährleisten eine Durchlüftung der hohlen Walze 1 und minimieren Korrosion durch Feuchtigkeit, die in die Walze 1 eindringt oder Kondenswasser. Die Öffnungen 32 können weiterhin zur Inspektion des Walzeninneren genutzt werden, um bei regelmäßig stattfindenden Kontrollen eventuelle Schäden rechtzeitig feststellen zu können. Die Dicke der Scheiben 30 ist auf die maximal auftretenden Belastungen abgestimmt.

Der zylindrische Walzenkörper 20 und die kreisringförmigen Scheiben 30 können aus einem einfachen Baustahl, wie St 37 hergestellt sein. Dieser ist kostengünstig und gut schweißbar.

Im Betrieb wird ein Fahrzeug mit seiner angetriebenen Achse auf der Walze 1 oder, wenn das Fahrzeug über mehr als eine angetriebene Achse verfügt oder zwei Walzen 1 für ein Rad vorgesehen sind, auf der oder den Walzen 1 platziert. Die wenigstens eine Walze 1 wir durch einen nicht dargestellten Antrieb, welcher von einer entsprechenden Steuerung durch ein vorgewähltes Programm gesteuert wird, in Rotation versetzt. Das dabei ebenfalls mitrotierende Rad des Fahrzeuges kann durch die Bremse es Fahrzeuges abgebremst werden. Aus dem Widerstand, den die Bremse des Fahrzeuges dem Antrieb der Walze entgegen setzt kann auf den Zustand der Bremse geschlossen werden.

Die erfindungsgemäße Profilierung der Walze 1 gewährleistet dabei eine gleichbleibende Haftung zwischen Reifen und Walze 1, auch bei erschwerten Bedingungen, wie Schnee, Schlamm oder Nässe.

Überschreitet die Walze 1 eine bestimmte Länge oder treten große Belastungen durch beispielsweise größere Fahrzeuge auf, kann ebenfalls vorgesehen sein, zusätzliche Scheiben 30 vorzusehen, um eine Deformation des Walzenkörpers 20 zu verhindern. Die zusätzlichen Scheiben 30 können beispielsweise im wahrscheinlichsten Aufstandsbereich der Räder vorgesehen sein.

Weiterhin können zusätzliche Öffnungen 32 in den Scheiben 30 vorgesehen sein, die sich unmittelbar an deren Außenrand befinden. Dadurch kann bei viel Nässe diese direkt aus dem Inneren der Walze 1 abfließen. Ein Trocknen wird so beschleunigt und Korrosion weiter minimiert.

Es können auch mehrere benachbarte Schweißpunkte 22 zu einer Schweißraupe zusammengefasst werden. Der generelle schraubenlinienförmige Verlauf der Profilierung bleibt dabei erhalten.

An den Walzen 1 können ebenfalls Bewegungssensoren angebracht sein, die mit der Steuerung S verbunden sind. Die auf diese Weise erhaltene Regelung kann z.B. auftretenden Schlupf ausgleichen oder eine automatische Abschaltung des Prüfstandes in Notfallsituationen bewirken.

Der in Fig. 1 dargestellte Rollenprüfstand weist zwei erfindungsgemäße Walzen 1 auf. Es ist aber auch möglich, nur eine erfindungsgemäße Walze 1 vorzusehen. Sind zwei Walzen vorgesehen, ist es weiterhin möglich, nur eine der Walzen mit einer Profilierung entsprechend der vorliegenden Erfindung zu versehen.

### Bezugszeichenliste

- A: Rotationsachse
- M: Motor
- S: Steuerung
- T: Transmission
- 1: Walze
- 10: Welle
- 12: linkes Achsenende
- 14: rechtes Achsenende
- 16: Schulter
- 18: Nut
- 20: Walzenkörper
- 22: Schweißpunkte
- 24: Schraubenlinie/Schraubenlinienabschnitt
- 30: Scheibe
- 32: Öffnung
- 40: Schweißnaht

## Patentansprüche

1. Walze für einen Rollenprüfstand, die eine profilierte Oberfläche aufweist,
**dadurch gekennzeichnet, dass** die Profilierung der Walze (1) durch Schweißpunkte (22) gebildet ist, die auf der Oberfläche der Walze (1) entlang wenigstens eines Schraubenlinienabschnitts (24) angeordnet sind.

2. Walze für einen Rollenprüfstand nach Anspruch 1,
**dadurch gekennzeichnet, dass** der wenigstens eine Schraubenlinienabschnitt (24) links- oder rechtsläufig ist.

3. Walze für einen Rollenprüfstand nach Anspruch 1 oder 2,
**dadurch gekennzeichnet, dass** die Schweißpunkte (22) entlang zweier gegenläufiger Schraubenlinienabschnitte (24) angeordnet sind.

4. Walze für einen Rollenprüfstand nach einem der Ansprüche 1 bis 3,
**dadurch gekennzeichnet, dass** mehrere Schraubenlinienabschnitte (24) auf der Oberfläche der mindestens einen Walze (1) vorgesehen sind.

5. Walze für einen Rollenprüfstand nach Anspruch 4,
**dadurch gekennzeichnet, dass** die mehreren Schraubenlinienabschnitte (24) auf der Oberfläche der mindestens einen Walze (1) gegenläufig sind und/oder unterschiedliche Steigungen aufweisen.

6. Walze für einen Rollenprüfstand nach einem der Ansprüche 1 bis 5,
**dadurch gekennzeichnet, dass** der Abstand der Schweißpunkte (22) auf einem Schraubenlinienabschnitt (24) zueinander gleichmäßig oder ungleichmäßig oder gemischt sein kann.

7. Walze für einen Rollenprüfstand nach einem der Ansprüche 1 bis 6,
**dadurch gekennzeichnet, dass** die Schweißpunkte (22) einen halbkreisförmigen oder einen kalottenförmigen Querschnitt haben.

8. Walze für einen Rollenprüfstand nach einem der Ansprüche 1 bis 7,
**dadurch gekennzeichnet, dass** die wenigstens eine Walze (1) durch einen koaxial um eine Welle (10) angeordneten Zylinder (20) gebildet ist, der mittels kreisringförmiger Scheiben (30) axial nicht verschiebbar und drehfest mit der Welle (10) verbunden ist, wobei die drehfeste Verbindung zwischen dem Zylinder (20) und der Welle (10) durch eine Schweißverbindung realisiert ist.

9. Rollenprüfstand für Kraftfahrzeuge, enthaltend eine Abrolleinrichtung zum Abrollen der Räder des Kraftfahrzeugs mit wenigstens einer drehbar gelagerten Walze (1), welche eine profilierte Oberfläche aufweist, eine Antriebs-und Bremseinheit zum Antreiben und Abbremsen der Abrolleinrichtung und eine Steuereinheit zum Steuern der Antriebseinheit,
**dadurch gekennzeichnet, dass** die Walze (1) eine Walze gemäß Anspruch 1 ist.

10. Rollenprüfstand nach Anspruch 9,
**dadurch gekennzeichnet, dass** der wenigstens eine Schraubenlinienabschnitt (24) links- oder rechtsläufig ist.

11. Rollenprüfstand nach Anspruch 9 oder 10,
**dadurch gekennzeichnet, dass** mehrere Schraubenlinienabschnitte (24) auf der Oberfläche der mindestens einen Walze (1) vorgesehen sind.

12. Rollenprüfstand nach Anspruch 11,
**dadurch gekennzeichnet, dass** die mehreren Schraubenlinienabschnitte (24) auf der Oberfläche der mindestens einen Walze (1) gegenläufig sind und/oder unterschiedliche Steigungen aufweisen.

13. Rollenprüfstand nach einem der Ansprüche 9 bis 12,
**dadurch gekennzeichnet, dass** der Abstand der Schweißpunkte (22) auf einem Schraubenlinienabschnitt (24) zueinander gleichmäßig oder ungleichmäßig oder gemischt sein kann.

14. Rollenprüfstand nach einem der Ansprüche 9 bis 13,
**dadurch gekennzeichnet, dass** die Schweißpunkte (22) einen halbkreisförmigen oder einen kalottenförmigen Querschnitt haben.

15. Rollenprüfstand nach einem der Ansprüche 9 bis 14,
**dadurch gekennzeichnet, dass** die wenigstens eine Walze (1) durch einen koaxial um eine Welle (10) angeordneten Zylinder (20) gebildet ist, der mittels kreisringförmiger Scheiben (30) axial nicht verschiebbar und drehfest mit der Welle (10) verbunden ist, wobei die drehfeste Verbindung zwischen dem Zylinder (20) und der Welle (10) insbesondere durch eine Schweißverbindung realisiert ist.

## Claims

1. A roller for a roller test bench, comprising a profiled surface,
**characterized in that** the profile of the roller (1) is formed by welding spots (22) arranged along at least one helix section (24) on the surface of the roller (1).

2. The roller for a roller test bench according to claim 1,
**characterized in that** the at least one helix section (24) is running counterclockwise or clockwise.

3. The roller for a roller test bench according to claim 1 or 2,
**characterized in that** the welding spots (22) are arranged along two contrarily running helix sections (24).

4. The roller for a roller test bench according to any one of the claims 1 to 3,
**characterized in that** a plurality of helix sections (24) are provided on the surface of the at least one roller (1).

5. The roller for a roller test bench according to claim 4,
**characterized in that** the plurality of helix sections (24) an the surface of the at least one roller (1) are running contrarily and/or having different pitches.

6. The roller for a roller test bench according to any one of the claims 1 to 5,
**characterized in that** the distance of the welding spots (22) in a helix section (24) can be regular or irregular or a mixture thereof.

7. The roller for a roller test bench according to any one of the claims 1 to 6,
**characterized in that** the welding spots (22) have a semi-circular or dome-shaped cross section.

8. The roller for a roller test bench according to any one of the claims 1 to 7,
**characterized in that** the at least one roller (1) is formed by a cylinder (20) coaxially arranged around a shaft (10) and connected to the shaft (10) in an axially non-slidable and torque-proof manner by annular plates (30), wherein the torque-proof connection between the cylinder (20) and the shaft (10) is implemented by a welded connection.

9. A roller test bench for motor vehicles, comprising a rolling device for rolling the wheels of the motor vehicle, the rolling device comprising at least one rotatably supported roller (1) having a profiled surface, a driving and braking unit for driving and braking the rolling device, and a controller for controlling the driving device,
**characterized in that** the roller (1) is a roller according to claim 1.

10. The roller test bench according to claim 9,
**characterized in that** the at least one helix section (24) is running counterclockwise or clockwise.

11. The roller test bench according to claim 9 or 10,
**characterized in that** a plurality of helix sections (24) are provided on the surface of the at least one roller (1).

12. The roller test bench according to claim 11,
**characterized in that** the plurality of helix sections (24) an the surface of the at least one roller (1) are running contrarily and/or having different pitches.

13. The roller test bench according to any one of the claims 9 to 12,
**characterized in that** the distance of the welding spots (22) in a helix section (24) can be regular or irregular or a mixture thereof.

14. The roller test bench according to any one of the claims 9 to 13,
**characterized in that** the welding spots (22) have a semi-circular or dome-shaped cross section.

15. The roller test bench according to any one of the claims 9 to 14,
**characterized in that** the at least one roller (1) is formed by a cylinder (20) coaxially arranged around a shaft (10) and connected to the shaft (10) in an axially non-slidable and torque-proof manner by annular plates (30), wherein the torque-proof connection between the cylinder (20) and the shaft (10) is implemented by a welded connection.

## Revendications

1. Cylindre pour un banc d'essai à rouleaux, qui a une surface profilée,
**caractérisé en ce que** le profilage du cylindre (1) est formé par des points (22) de soudure, qui sont disposés sur la surface du cylindre (1) le long d'au moins un segment (24) hélicoïdal.

2. Cylindre pour un banc d'essai à rouleaux suivant la revendication 1,
**caractérisé en ce que** le au moins un segment (24) hélicoïdal tourne à gauche ou tourne à droite.

3. Cylindre pour un banc d'essai à rouleaux suivant la revendication 1 ou 2,
**caractérisé en ce que** les points (22) de soudure sont disposés le long de deux segments (24) hélicoïdaux tournant en sens contraire.

4. Cylindre pour un banc d'essai à rouleaux suivant l'une des revendications 1 à 3,
**caractérisé en ce qu'**il est prévu plusieurs segments (24) hélicoïdaux à la surface du au moins un cylindre (1).

5. Cylindre pour un banc d'essai à rouleaux suivant la revendication 4,
**caractérisé en ce que** les plusieurs segments (24) hélicoïdaux tournent en sens contraire à la surface du au moins un cylindre (1) et/ou ont des pas différents.

6. Cylindre pour un banc d'essai à rouleaux suivant l'une des revendications 1 à 5,
**caractérisé en ce que** la distance entre les points (22) de soudure sur un segment (24) hélicoïdal peut être uniforme ou ne pas l'être ou être mixte.

7. Cylindre pour un banc d'essai à rouleaux suivant l'une des revendications 1 à 6,
**caractérisé en ce que** les points (22) de soudure ont une section transversale hémicirculaire ou en forme de calotte.

8. Cylindre pour un banc d'essai à rouleaux suivant l'une des revendications 1 à 7,
**caractérisé en ce que** le au moins un cylindre (1) est formé d'une partie (20) cylindrique disposée coaxialement autour d'un arbre (10), qui est reliée au moyen de disques (30) annulaires sans possibilité de se déplacer axialement et solidaire en rotation de l'arbre (10), la liaison de solidarité en rotation entre la partie (20) cylindrique et l'arbre (10) étant réalisée par une soudure.

9. Banc d'essai à rouleaux pour des véhicules automobiles, comprenant un dispositif de roulement pour faire rouler les roues du véhicule automobile, ayant au moins un cylindre (1) monté tournant qui a une surface profilée, une unité d'entraînement et de freinage pour entraîner et freiner le dispositif de roulement et une unité de commande pour commander l'unité d'entraînement, **caractérisé en ce que** le cylindre (1) est un cylindre suivant la revendication 1.

10. Banc d'essai à rouleaux suivant la revendication 9, **caractérisé en ce que** le au moins un segment (24) hélicoïdal tourne à gauche ou tourne à droite.

11. Banc d'essai à rouleaux suivant la revendication 9 ou 10, **caractérisé en ce qu'**il est prévu plusieurs segments (24) hélicoïdaux à la surface du au moins un cylindre (1).

12. Banc d'essai à rouleaux suivant la revendication 11, **caractérisé en ce que** les plusieurs segments (24) hélicoïdaux tournent en sens contraire à la surface du au moins un cylindre (1) et/ou ont des pas différents.

13. Banc d'essai à rouleaux suivant l'une des revendications 9 à 12,
**caractérisé en ce que** la distance entre les points (22) de soudure sur un segment (24) hélicoïdal peut être uniforme ou ne pas l'être ou être mixte.

14. Banc d'essai à rouleaux suivant l'une des revendications 9 à 13,
**caractérisé en ce que** les points (22) de soudure ont une section transversale hémicirculaire ou en forme de calotte.

15. Banc d'essai à rouleaux suivant l'une des revendications 9 à 14,
**caractérisé en ce que** le au moins un cylindre (1) est formé d'une partie (20) cylindrique disposée coaxialement autour d'un arbre (10), qui est reliée au moyen de disques (30) annulaires sans possibilité de se déplacer axialement et solidaire en rotation de l'arbre (10), la liaison de solidarité en rotation entre la partie (20) cylindrique et l'arbre (10) étant réalisée par une soudure.
